# EUROPÄISCHE PATENTSCHRIFT

(11) **EP 2 174 545 B1**
(45) Veröffentlichungstag und Bekanntmachung des Hinweises auf die Patenterteilung: **12.07.2017**
(21) Anmeldenummer: 09014121.9
(22) Anmeldetag: 19.05.2004
(51) Int. Cl.: A01M 29/06, A01M 29/10, C03C 17/23, C03C 23/00

(54) **Transparente Scheibe, Vogelschlagvermeidungsverfahren**
Transparent material, bird strike protection method
Corps transparent, procédé de protection d'ingestion d'oiseau

(30) Priorität: 19.05.2003 DE 10322500
(43) Veröffentlichungstag der Anmeldung: 14.04.2010
(62) Teilanmeldung aus: 04011948.9
(73) Patentinhaber: Meyerhuber, Alfred, Dr., 91522 Ansbach (DE); Glaswerke Arnold GmbH & Co. KG, 73630 Remshalden (DE)
(72) Erfinder: Arnold, Hans-Joachim, 73630 Remshalden (DE); Sader, Michael, 91710 Gunzenhausen (DE); Meyerhuber, Peter, 91710 Gunzenhausen (DE); Meyerhuber, Alfred, Dr., 91522 Ansbach (DE)
(74) Vertreter: Beetz & Partner mbB

(56) Entgegenhaltungen:
- EP-A- 1 048 627
- EP-A- 1 110 450
- WO-A-97/07069
- DE-A1- 19 918 811
- DE-U1- 20 215 573
- "PRODUCT NEWS" SPRECHSAAL, VERLAG DES SPRECHSAAL MULLER UND SCHMIDT. COBURG, DE, Bd. 121, Nr. 9, 1. August 1988 (1988-08-01), Seite 708,710,712,71, XP000021087 ISSN: 0341-0676
- BUERHOP C ET AL: "Surface treatment of glass and ceramics using XeCl excimer laser radiation" GLASTECHNISCHE BERICHTE, VERLAG DER DEUTSCHEN GLASTECHNISCHEN GESELLSCHAFT, FRANKFURT, DE, Bd. 66, Nr. 3, 1. März 1993 (1993-03-01), Seiten 61-67, XP002236498 ISSN: 0017-1085

## Beschreibung

Die Erfindung betrifft eine transparente Scheibe und ein Vogelschlagvermeidungsverfahren gemäß den Oberbegriffen der unabhängigen Ansprüche.

Es ist Vögeln kaum möglich, durchsichtige Hindernisse zu erkennen und diesen auszuweichen, da diese Hindernisse ein Nebenprodukt der Erfindungen der Neuzeit sind und Vögel sich diesen geänderten Umständen noch nicht angepasst haben. Durch dieses Nichterkennen der Hindernisse kommt es häufig zum Vogelschlag bzw. Vogeltod und/oder zu zerbrochenen Glasscheiben.

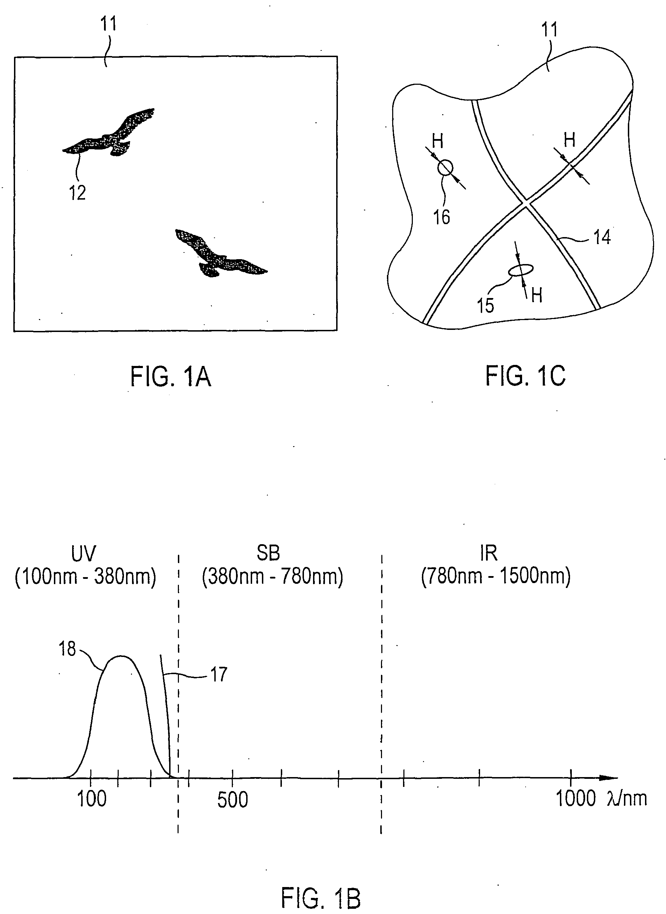

Eine Abhilfe kann hier dadurch geschaffen werden, verglaste Flächen mit optisch wahrnehmbaren Strukturen zu versehen, was oft in der Form von Raubvogelsilhouetten geschieht, um nicht nur ein erkennbares Hindernis sondern auch noch eine Gefahr darzustellen. Fig. 1A stellt dies schematisch dar. Auf einer transparenten Fläche 11 ist eine Silhouette 12 aufgeklebt. Dabei handelt es sich in der Regel um schwarze und damit undurchsichtige Folien, die von Vögeln und Menschen wahrgenommen werden. Ein Nachteil dieses Lösungsansatzes besteht darin, dass die Lichtdurchlässigkeit als wesentliche Funktion von Glasflächen sowie die Ästhetik beeinträchtigt sind.

Eine andere Vogelschutzvorrichtung ist aus DE 199 61 506 A1 bekannt. Dort wird auf dem Glas ein transparenter Stoff aufgebracht, der wegen der UV-Sichtigkeit von Vögeln für Vögel besser sichtbar ist als für Menschen. Fig. 1B zeigt das Absorptions- oder Reflexionsspektrum einer solchen bekannten Vogelschutzvorrichtung. Sie absorbiert bzw. reflektiert Licht im für Menschen nicht sichtbaren Bereich.

Fig. 1C schließlich zeigt schematisch eine aus der früheren Anmeldung DE 101 61 336.9 bekannte Glasscheibe 11, auf die eine linienartige Struktur 14, eine elliptische Struktur 15 und als Sonderfall der elliptischen Struktur eine kreisförmige Struktur 16 aufgebracht wurden. Die mit H bezeichnete Hauptabmessung definiert dabei den kleinsten Abstand zweier Ränder einer Struktur zueinander, also beispielsweise die Linienbreite oder den kleinsten Durchmesser einer Ellipse oder den Durchmesser eines Kreises. Sie kann kleiner als 1 mm oder als ein noch kleinerer Grenzwert sein.

Ferner ist ein Sicherheitsglas bekannt, in das feine elektrisch verbundene Metalldrähte eingearbeitet sind. Dies dient aber der Bruchdetektion anhand der Auswertung der elektrischen Werte (Widerstand) der eingearbeiteten Drähte.

Die WO 97/07069 beschreibt selbstreinigendes Glas mit bestimmten Schichten aus Materialien, die mit photoaktiven Zusätzen versehen sind.

Die DE 19918811 A1 beschreibt Sicherheitsglas, das mit einer Si02-Antireflexionsschicht versehen ist.

Aufgabe der Erfindung ist es, ein einfach anwendbares Material für den Vogelschlagschutz an Scheiben anzugeben.

Diese Aufgabe wird mit den Merkmalen der unabhängigen Ansprüche gelöst.

Eine Scheibe eines transparenten Stoffes ist musterartig mit einem Stoff beschichtet, der in einem Wellenlängenbereich unter 500 nm Wellenlänge ein Maximum der Strahlungsabsorption und/ oder der Strahlungsreflexion und/ oder der Strahlungsstreuung aufweist. Der Stoff ist ein Metalloxid oder weist Metalloxid auf.

Eine Vogelschutzvorrichtung kann beim oder im transparenten Stoff auch eine optisch wirksame Struktur sein oder aufweisen, deren eine Hauptabmessung kleiner 2 mm, vorzugsweise kleiner 1 mm, vorzugsweise kleiner 0,5 mm, weiter vorzugsweise kleiner 0,1 mm, weiter vorzugsweise kleiner 0,05 mm ist.

Bei linienartigen Strukturen ist die Breite der Linie und bei elliptischen Strukturen der kleinsten Durchmesser die oben genannte Hauptabmessung. Diese definiert allgemein den kleinsten Abstand zweier Ränder einer Struktur zueinander, also beispielsweise die Linienbreite oder den kleinsten Durchmesser einer Ellipse oder den Durchmesser eines Kreises. Bei unregelmäßigen, fleckenartigen Strukturen kann der Durchmesser eines flächengleichen Kreises die Hauptabmessung sein. Bei verteilten Werten kann ggf. deren Mittelwert die Hauptabmessung sein.

Die optisch wirksame Struktur kann einen anderen Brechungsindex und/oder eine andere Lichtdurchlässigkeit und/oder ein anderes Streuverhalten als der transparente Stoff aufweisen.

Die optisch wirksame Struktur weist ein regelmäßiges und/oder zufallsgeneriertes und/oder unregelmäßiges und/oder amorphes Muster auf. Ferner kann sie Glas und/oder Kunststoff und/oder Metall, das elektrisch nicht angeschlossen ist, sein oder aufweisen.

Die erweiterte Wellenlängensichtigkeit von Vögeln kann durch eine oder mehrere der folgenden Maßnahmen ausgenützt werden:
(1) Gemäß einem für sich alleine nicht unter die Patentansprüche fallenden Aspekt wird in den flächig ausgebildeten transparenten Stoff Licht im entsprechenden Wellenlängenbereich, insbesondere UV-Licht (Wellenlänge < 500 nm, vorzugsweise < 450 nm, weiter vorzugsweise <400 nm), aktiv von entsprechenden Quellen eingestrahlt, das dann wieder von Streu- oder Reflexions- oder Absorptionszentren im oder am transpartenten Stoff so manipuliert wird, daß der transparente Stoff als UV-leuchtend erscheint und somit als Hindernis erkennbar wird. Das Licht kann beispielsweise vom Rand einer (Glas-)Scheibe in diese eingestrahlt und dann von dieser wieder aus der Fläche abgestrahlt werden. Die Lichtquelle(n) kann bzw. können am Rand der Scheibe und/oder im Rahmen der Scheibe angebracht sein.
(2) Bei Doppelscheiben, die zwischen sich ein Fluid, insbesondere ein Gas vorzugsweise gasdicht einschließen, kann gemäß einem nicht unter die Patentansprüche fallenden Aspekt die Manipulation des UV-Lichts (Absorption, Reflexion) auch durch Befüllung des Zwischenraums zwischen den Doppelscheiben mit einem Fluid, insbesondere Gas mit entsprechenden Absorptions- bzw. Reflexionseigenschaften erfolgen.
(3) Weiterhin kann das gewünschte wellenlängenselektive Absorptions- bzw. Reflexionsberhalten durch Aufdampfen bestimmter Stoffe auf eine Scheibe erzeugt werden, dies ggf. auch wieder bestimmten Mustern folgend. Die Stoffe weisen ein oder mehrere Oxide von Metallen auf.
(4) Schließlich kann das gewünschte wellenlängenselektive Absorptions- bzw. Reflexionsberhalten durch nicht dauerhaften Auftrag dieser Stoffe auf eine Scheibe erzeugt werden, bspw. indem geeignete gelöste Stoffe auf eine Scheibe aufgesprüht werden und das Lösungsmittel dann verdunstet.

UV-Manipulation, insbes. Absorption bzw. Reflexion bzw. Bestrahlung erfolgt insbesondere im UV-Bereich (Wellenlänge < 500 nm, vorzugsweise < 450 nm, weiter vorzugsweise < 400 nm) an einer oder mehreren einzelnen Wellenlängen 17 oder Wellenlängenbereichen 18. Im sichtbaren Bereich (Wellenlänge > 500 nm, vorzugsweise > 450 nm, weiter vorzugsweise > 400 nm, und Wellenlänge < 800 nm) dagegen erfolgt keine oder kaum Reflexion bzw. Absorption, insbesondere in der Weise, dass die Intensitätsminderung im genannten Bereich unter 20%, vorzugsweise unter 8%, weiter vorzugsweise unter 3 % liegt.

Der mit der Vogelschutzvorrichtung versehene transparente Stoff kann Glas oder Kunststoff sein. Dieser transparente Stoff ist entweder als Flachglas ausgebildet, wobei die Vogelschutzvorrichtung auf mindestens einer Oberfläche des Flachglases ausgebildet oder angebracht sein kann, oder als mehrlagige Glasscheibe, wo die Vogelschutzvorrichtung dann zwischen mindestens zwei Lagen vorgesehen sein kann.

Bezugnehmend auf die Zeichnungen werden nachfolgend einzelne Ausführungsformen einer Vogelschutzvorrichtung beschrieben, die für sich alleine nicht notwendigerweise die patentierte Erfindung beschreiben, es zeigen:
- Fig. 1: bekannte Vogelschutzvorrichtungen,
- Fig. 2: eine Ausführungsform einer feinen Struktur,
- Fig. 3: eine Ausführungsform mit UV-Bestrahlung
- Fig. 4: eine Ausführungsform mit Befüllung eines Volumens,
- Fig. 5: eine Ausführungsform mit Beschichtung.

Eine Scheibe eines transparenten Stoffes ist musterartig mit einem Stoff beschichtet, der in einem Wellenlängenbereiche unter 500 nm Wellenlänge ein Maximum der Strahlungsabsorption und/ oder der Strahlungsreflexion und/ oder der Strahlungsstreuung aufweist. Der Stoff ist ein Metalloxid oder weist Metalloxid auf.

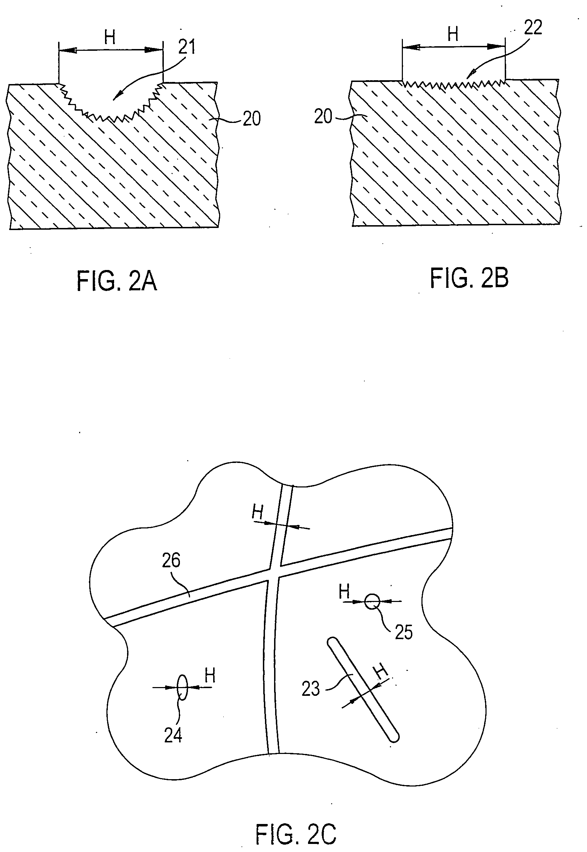

Eine Technik nutzt die Tatsache, dass viele Vögel ein höheres Auflösungsvermögen der Sichtigkeit haben und dadurch bei gegebenem Abstand feine Strukturen optisch wahrnehmen können, die ein Menschen kaum oder nicht mehr optisch wahrnehmen kann. Dies ist in Fig. 2 schematisch gezeigt.

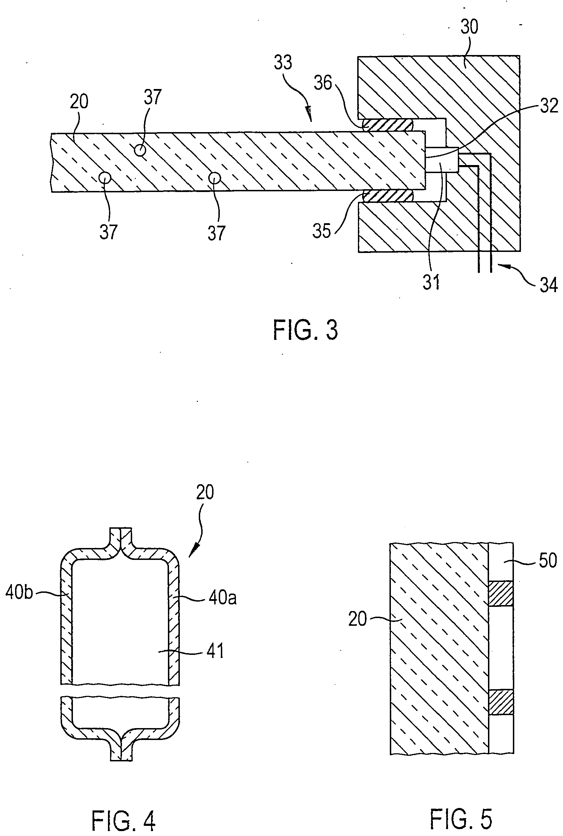

Eine andere, in den Figuren 3 bis 5 gezeigte Technik nützt zusätzlich oder stattdessen in weiter unten beschriebener Ausgestaltung die Tatsache, daß viele Vögel einen anderen und insbesondere weiteren Wellenlängenbereich besitzen, den sie wahrnehmen können. Dieser Wellenlängenbereich ist für einen Menschen kaum oder nicht mehr optisch wahrnehmbar. Eine Glasscheibe, die dementsprechend präpariert ist, wird damit für Vögel anders als durchsichtig erscheinen und damit als Hindernis erkennbar sein.

Die Fig. 2 zeigt verschiedene weitere Ausführungsformen der Struktur einer Vogelschutzvorrichtung, die für sich alleine nicht unter die Patentansprüche fallen.

Fig. 2A zeigt schematisch eine Glasscheibe 20 im Schnitt, in die mittels Laserbearbeitung ein Gesenk als optisch wirksame Struktur 21 eingebracht wurde. Es ist längs seiner Hauptabmessung H geschnitten dargestellt. Bei einer linienartigen Struktur kann dies deren Breite sein. Das Gesenk kann bspw. wegen seines rauhen Bodens als matt gegenüber dem umgebenden transparenten Stoff (Glas, Plastik) erscheinen, so dass es von Vögeln wahrgenommen werden kann.

Fig. 2B zeigt eine Abwandlung zur Ausführungsform der Fig. 2A dahingehend, daß kein Gesenk in die (Glas-)Scheibe eingearbeitet wurde, sondern lediglich die Oberfläche aufgerauht wurde und der aufgerauhte Bereich matt wirkt, so daß auch auf diese Weise eine feine Linie mit Hauptabmessung H erzeugt werden kann.

Anstelle der Bearbeitung mittels Laserstrahls kann auch die Bearbeitung mit einem feinen Sandstrahl erfolgen, der optisch wirksame Strukturen wie oben beschrieben erzeugt.

Fig. 2C zeigt die erzeugten Strukturen in Draufsicht. Es können kurze Linien 23 oder durchgehende Striche 26 sein oder punkt- oder ellipsenförmige Muster 24, 25. Deren wie oben definierte Hauptabmessung kann den oben genannten Bedingungen genügen.

Die Strukturen können in eine Scheibe bspw. nach deren Herstellung eingearbeitet werden, indem ein Laserstrahl geeignet (Bahn, Intensität, Geschwindigkeit) über die Fläche der Scheibe geführt wird, bspw. über eine Umlenkoptik mit Spiegeln oder durch Bewegung der Laserquelle selbst, um die Struktur(en) einzuarbeiten. Dies ist auch nach dem Einbau von Scheiben möglich, so dass auch schon verbaute Scheiben mit dieser Verfahrensweise "nachgerüstet" werden können.

Die Fig. 3 zeigt eine Technik einer Vogelschutzvorrichtung, die die bessere Wellenlängensichtigkeit von Vögeln ausnützt. Sie zeigt den Schnitt durch eine (Glas)-Scheibe 20, die in einem schematisch angedeuteten Rahmen 30 mit Dichtmitteln 35, 36 gehalten sein kann. Es ist eine Beleuchtungseinrichtung 31 vorgesehen, die die Scheibe 20 mit einem bestimmten Licht beleuchtet. Die Wellenlänge des Lichts hat ihr Intensitätsmaximum vorzugsweise bei unter 500 nm, vorzugsweise unter 450 nm, weiter vorzugsweise unter 400 nm. Es handelt sich überwiegend oder ausschließlich um UV-Licht. Bei der Beleuchtungseinrichtung kann es sich um UV-Lampen und/oder um UV-Leuchtdioden handeln. Dementsprechend sind elektrische Anschlüsse 34 etc. vorhanden.

Durch die Beleuchtung einer Scheibe 20 eines transparenten Stoffes mit Licht einer Wellenlänge wie oben beschrieben bzw. von unter 500 nm ergibt sich somit ein Verfahren zur Vermeidung von Vogelschlag an transparenten Scheiben. Die Quelle des Lichts kann so angeordnet sein, daß das Licht nur im Randbereich 33 (insbes. Abstand zur Kante < 10% der Abmessung bis zur gegenüberliegenden Kante) der Scheibe 20 oder in keinem Bereich der Scheibe senkrecht auf die Scheibe fällt bzw. daß das Licht überwiegend schräg eingestrahlt wird.

Das Licht kann auch - wie gezeigt - von der Kante 32 der Scheibe in die Scheibe eingestrahlt werden. Die Scheibe kann vorher, bspw. schon bei ihrer Herstellung, mit Streuzentren 37 versehen worden sein, die insbesondere bzw. überwiegend und vorzugsweise ausschließlich das eingestrahlte Licht streuen. Insoweit ist also auch eine transparente Scheibe 20 mit einer am Rand der Scheibe angeordneten Beleuchtungseinrichtung 31 zur Beleuchtung der Scheibe mit Licht wie oben beschrieben Teil der Erfindung. Gleiches gilt für eine Scheibe 20 mit UV-wirksamen Streuzentren 37 und für ein Fenster oder eine Tür mit einer transparenten Scheibe 20 und einem Rahmen 30, der die Scheibe ganz oder bereichsweise umgibt, und einer vorzugsweise am oder im Rahmen 30 angeordnete, oben beschriebenen Beleuchtungseinrichtung 31. Auch ein Rahmen alleine für eine transparente Scheibe mit einer oben beschriebenen Beleuchtungseinrichtung 31 ist Teil der Erfindung.

Fig. 4 zeigt eine Technik einer Vogelschutzvorrichtung im Schnitt. Sie hat eine Doppelscheibe 20 (z. B. Isolierglas) mit zwei Scheiben 40a, 40b und einem Raum 41 zwischen ihnen, der gasdicht abgeschlossen sein kann. In ihm befindet sich ein Fluid, vorzugsweise ein Gas, das Licht bestimmter Wellenlängen absorbiert und/oder reflektiert. Die Reflexions- bzw. Absorptionskurve des Fluids hat ihr Maximum vorzugsweise bei unter 500 nm, vorzugsweise unter 450 nm, weiter vorzugsweise unter 400 nm, insbesondere im UV-Bereich. Das Fluid kann auch Flüssigkeitströpfchen aufweisen, die die genannten Eigenschaften haben. Die Tröpfchen können natürlich entstehen oder durch eine geeignete Einrichtung erzeugt werden, bspw. einer Ultraschalleinrichtung, bspw. piezoelektrisch.

Die Scheibe 20 eines transparenten Stoffes ist, bereichsweise, wie in Fig. 5 schematisch gezeigt, mit einem Metalloxid 50 beschichtet, das Wellenlängen und/oder Wellenlängenbereiche wie oben genannt absorbiert und/oder reflektiert und/oder streut und andere Wellenlängenbereiche im Wesentlichen unbeeinflusst lässt. Der Auftrag folgt einem bestimmten Muster. Er kann auf einer der beiden Oberflächen einer Scheibe oder auf beiden vorgesehen sein. Bei Doppelscheiben kann er auf der Innenseite einer oder beider Scheiben vorgesehen sein.

Anstelle einer fest aufgebrachten Reflexions- bzw. Absorptionsschicht kann die Vermeidung von Vogelschlag an transparenten Scheiben 20 auch dadurch erfolgen, daß auf die Scheibe wiederholt ein nicht dauerhaft haltender Stoff wie oben aufgetragen wird, der Wellenlängen wie oben genannt absorbiert und/oder reflektiert und/oder streut. Der Stoff kann mit dem Lösungsmittel aufgetragen werden, das nach dem Auftrag verdunstet. Er kann in einem Fensterputzmittel oder separat hiervon vorgesehen sein, im letzteren Falle aber bspw. als Gebinde mit einem herkömmlichen Putzmittel vorgesehen sein und verkauft werden.

Allgemein liegt der für Menschen sichtbare Bereich von Licht etwa zwischen 400 und 800 nm. Darüber liegt der Infrarotbereich (IR), darunter der ultraviolette Bereich (UV). Die oben beschriebenen Wellenlängenselektivitäten bei Absorption, Reflexion, Emission oder Streuung können eine Linie oder ein Maximum eines Bereichs insbesondere im Wellenlängenbereich zwischen 50 und 450 nm haben. Solche Charakteristika sprechen die UV-Sichtigkeit von Vögeln an, so dass die so behandelte (Glas-)Scheibe für Vögel UVdunkler oder UV-heller erscheint und damit sichtbar wird. Vorzugsweise liegt die Absorptionslinie und/oder das Maximum im Wellenlängenbereich zwischen 420 und 200 nm, weiter vorzugsweise zwischen 420 und 360 nm. Es können auch mehrere Absorptionslinien oder Absorptionsmaxima wie oben angegeben vorgesehen sein, wobei diese dann auf unterschiedlichen Wellenlängen in den oben genannten Bereichen liegen können. Soweit sinnvoll, können Absorptionslinien oder Absorptionsmaxima auch im Infrarotbereich liegen, dort z.B. im Wellenlängenbereich zwischen 750 und 3000 nm, vorzugsweise zwischen 780 und 1500 nm.

Die Vogelschutzvorrichtung wird einem bestimmten Muster folgend auf dem transparenten Stoff aufgebracht. Sofern ein Muster vorgesehen ist, kann es abermals die Silhouette eines Raubvogels sein. Es kann sich auch um andere Muster handeln, beispielsweise um Streifen, Gitter, Punkte oder ähnliches. Bei solchen Ausführungsformen wären dann diese Muster für zumindest eine Vogelart optisch besser wahrnehmbar als für einen Menschen. Insbesondere wären sie für Menschen nicht oder kaum wahrnehmbar.

Sofern von der Wahrnehmbarkeit durch Vögel oder Menschen gesprochen wird, kann auf Durchschnittswerte abgehoben werden. Sofern eine Vogelschutzvorrichtung als optisch nicht wahrnehmbar beschrieben ist, kann damit eine Intensitätsminderung im für Menschen sichtbaren Bereich von weniger als 5%, vorzugsweise weniger als 1% gemeint sein. Sofern von einer kaum wahrnehmbaren Vogelschutzvorrichtung die Rede ist, kann damit eine Intensitätsminderung im sichtbaren Bereich von weniger als 20%, vorzugsweise weniger als 10% gemeint sein. Der sichtbare Bereich kann hier als von 400 nm bis 800 nm reichend angesehen werden.

Vorzugsweise werden bei der Betrachtung von Absorptions- und Reflexionsvermögen Relativwerte (z.B. %, dB) herangezogen.

In einer Technik einer Vogelschutzvorrichtung kann die Vorrichtung mehrere parallel zueinander verlaufende optisch wirksame Strukturen mit einem Abstand zueinander von kleiner 10 cm, vorzugsweise kleiner 3 cm, vorzugsweise kleiner 1 cm, weiter vorzugsweise kleiner 1 mm, weiter vorzugsweise kleiner 0,5 mm aufweisen.

In einer anderen Technik können sich erste parallel zueinander verlaufende optisch wirksame Strukturen, mit den oben genannten Abstand, mit zweiten parallel zueinander verlaufenden optischen Strukturen, mit oben genannten Abstand, vorzugsweise in einem rechten Winkel kreuzen. Die Hauptabmessung der optisch wirksamen Struktur kann dabei wie oben erwähnt sein.

## Patentansprüche

1. Scheibe (20) eines transparenten Stoffes, die mit einem Stoff beschichtet ist, der in einem Wellenlängenbereiche unter 500 nm Wellenlänge ein Maximum der Strahlungsabsorption und/oder der Strahlungsreflexion und/oder der Strahlungsstreuung aufweist, wobei der Stoff ein Metalloxid (50) ist oder aufweist,
**dadurch gekennzeichnet, dass**
der Stoff bereichsweise auf einem Teil der Fläche des transparenten Stoffs einem Muster folgend aufgebracht ist.

2. Scheibe (20) nach Anspruch 1, **dadurch gekennzeichnet, daß** die Substanz dauerhaft oder nicht dauerhaft auf der Oberfläche der Scheibe aufgebracht ist.

3. Scheibe nach einem oder mehreren der vorherigen Ansprüche, **dadurch gekennzeichnet, daß** die Scheibe eine Glasscheibe ist.

4. Scheibe nach einem oder mehreren der vorherigen Ansprüche, **dadurch gekennzeichnet, daß** der Stoff in einem Lösungsmittel lösbar ist.

5. Verfahren zur Vermeidung von Vogelschlag an transparenten Scheiben, bei dem auf die Scheibe ein ein Metalloxid aufweisender Stoff aufgetragen wird, der in einem Wellenlängenbereiche unter 500 nm Wellenlänge ein Maximum der Strahlungsabsorption und/oder der Strahlungsreflexion und/oder der Strahlungsstreuung aufweist,
**dadurch gekennzeichnet, daß**
der Stoff bereichsweise auf einem Teil der Fläche des transparenten Stoffs einem Muster folgend aufgetragen wird.

6. Verfahren nach Anspruch 5, **dadurch gekennzeichnet, daß** der Stoff in einem Lösungsmittel gelöst ist, der Stoff mit dem Lösungsmittel aufgetragen wird und das Lösungsmittel nach dem Auftrag verdunstet.

7. Verfahren nach Anspruch 5, **dadurch gekennzeichnet, daß** der Auftrag wiederholt erfolgt.

8. Scheibe (20) nach Anspruch 1, wobei der beschichtende Stoff in einem Lösungsmittel lösbar ist.

9. Scheibe (20) nach Anspruch 1, wobei der beschichtende Stoff auf die Scheibe aufdampfbar ist.

10. Scheibe (20) nach Anspruch 1, **dadurch gekennzeichnet, daß** der Stoff auf der Innenfläche einer Doppelscheibe des transparenten Stoffs aufgebracht ist.

## Claims

1. Pane (20) of a transparent material coated with a substance having, in a wavelength region below 500 nm, a maximum of radiation absorption and/or of radiation reflection and/or of radiation scattering, wherein the substance is or comprises a metal oxide (50),
**characterized in that**
the substance is provided on parts of portions of the area of the transparent material in accordance with a pattern.

2. Pane (20) according to claim 1, **characterized in that** the substance is provided permanently or non-permanently on the surface of the pane.

3. Pane according to one or more of the preceding claims, **characterized in that** the pane is a glass pane.

4. Pane according to one or more of the preceding claims, **characterized in that** the substance is soluble in a solvent.

5. Method for preventing bird strike at transparent panes, in which on the pane a substance comprising a metal oxide is applied which has, in a wavelength region below a wavelength of 500 nm a maximum of radiation absorption and/or radiation reflexion and/or radiation scattering,
**characterized in that**
the substance is deposited on a part of a portion of the area of the transparent material according to a pattern.

6. Method according to claim 5, **characterized in that** the substance is dissolved in a solvent, the substance is deposited with the solvent, and the solvent evaporates after being applied.

7. Method according to claim 5, **characterized in that** depositing is made repeatedly.

8. Pane (20) according to claim 1, **characterized in that** the coating substance is soluble in a solvent.

9. Pane (20) according to claim 1, wherein the coating substance is vapour-depositable on the pane.

10. Pane (20) according to claim 1, **characterized in that** the substance is deposited on an internal surface of a double pane of the transparent material.

## Revendications

1. Vitre (20) d'un matériau transparent, recouverte d'une substance présentant, dans une plage de longueur d'ondes inférieures à 500 nm, un maximum d'absorption du rayonnement et/ou de réflexion du rayonnement et/ou de diffusion du rayonnement, cette substance étant ou comportant un oxyde métallique (50),
**caractérisée en ce que**
- la substance est appliquée par zones sur une partie de la surface de la vitre transparente selon un modèle défini.

2. Vitre (20) selon la revendication 1, **caractérisée en ce que** la substance est appliquée sur la surface de manière permanente ou non permanente.

3. Vitre selon l'une quelconque ou plusieurs des revendications précédentes, **caractérisée en ce que** la vitre est une vitre en verre.

4. Vitre selon l'une quelconque ou plusieurs des revendications précédentes, **caractérisée en ce que** la substance peut être dissoute dans un solvant.

5. Procédé anticollision d'oiseaux contre des vitres transparentes, selon lequel on applique sur la vitre une substance comportant un oxyde métallique et offrant, dans une place de longueur d'ondes inférieures à 500 nm, un maximum d'absorption du rayonnement et/ou de réflexion du rayonnement et/ou de diffusion du rayonnement,
**caractérisé en ce que**
la substance est appliquée par zones sur une partie de la surface du matériau transparent selon un modèle défini.

6. Procédé selon la revendication 5, **caractérisé en ce que** la substance est dissoute dans un solvant, **en ce que** la substance est appliquée avec le solvant et **en ce que** le solvant s'évapore après l'application.

7. Procédé selon la revendication 5, **caractérisé en ce que** l'application s'effectue de manière répétée.

8. Vitre (20) selon la revendication 1, dans laquelle la substance à appliquer est dissoute dans un solvant.

9. Vitre (20) selon la revendication 1, dans laquelle la substance à appliquer peut s'évaporer sur la vitre.

10. Vitre (20) selon la revendication 1, **caractérisée en ce que** la substance est appliquée sur la face intérieure d'un double vitrage du matériau transparent.
